# EUROPÄISCHE PATENTSCHRIFT

(11) **EP 3 569 895 B1**
(45) Veröffentlichungstag und Bekanntmachung des Hinweises auf die Patenterteilung: **24.06.2020**
(21) Anmeldenummer: 18172170.5
(22) Anmeldetag: 14.05.2018
(51) Int. Cl.: F16H 33/02, F16K 31/04, F16K 31/53

(54) **STELLANTRIEB SOWIE VERFAHREN ZUM EINSTELLEN EINES STELLANTRIEBS**
ACTUATOR AND METHOD OF ADJUSTING AN ACTUATOR
ACTIONNEUR AINSI QUE PROCÉDÉ DE RÉGLAGE D'UN ACTIONNEUR

(43) Veröffentlichungstag der Anmeldung: 20.11.2019
(73) Patentinhaber: Siemens Schweiz AG, 8047 Zürich (CH)
(72) Erfinder: KONRAD, Hilmar, 6340 Baar (CH)
(74) Vertreter: Maier, Daniel Oliver

(56) Entgegenhaltungen:
- EP-A1- 0 697 546
- WO-A2-2007/051332
- DE-A1-102013 109 997
- US-A1- 2019 176 300

## Beschreibung

Die vorliegende Erfindung betrifft einen Stellantrieb, aufweisend ein Antriebselement, einen Übertragungsabschnitt und ein Stellelement, wobei das Antriebselement zum Antreiben des Stellelements mit dem Stellelement durch den Übertragungsabschnitt mechanisch wirkverbunden ist, der Stellantrieb ferner aufweisend eine Rückstellfeder zum Bereitstellen einer auf das Stellelement wirkenden Schließkraft. Ferner betrifft die vorliegende Erfindung ein Verfahren zum Einstellen eines Stellantriebs.

In der modernen Technik werden Stellantriebe häufig eingesetzt, beispielsweise um eine Klappe oder ein Ventil anzutreiben, insbesondere zum Heizen, Lüften oder Klimatisieren eines Gebäudes. Die jeweilige Klappe oder das Ventil wird zumeist durch das Stellelement des Stellantriebs bewegt oder sogar zumindest teilweise durch dieses direkt gebildet. Der Stellantrieb ist oftmals dazu eingerichtet, das Stellelement von einer ersten Stellposition in eine zweite Stellposition zu bewegen. Beide Stellpositionen können üblicherweise Endanschläge bilden. Eine erste Stellposition kann darüber hinaus als Startposition oder Ruheposition bezeichnet werden, in welche der Stellantrieb das Stellelement im stromlosen Zustand des Antriebselements, insbesondere mittels einer vorgespannten Rückstellfeder, wieder zurückstellt. Die zweite Stellposition kann als Betätigungsposition oder Endposition bezeichnet werden. Derartige Stellantriebe werden oft in Anlagen für die Heizung, Lüftung oder Kühlung in einem Gebäude eingesetzt, insbesondere um Luftklappen oder Ventile zu stellen. Für diese und ähnliche Zwecke müssen die Stellantriebe zuverlässig, beständig, preiswert, kompakt und in großem Volumen herstellbar sein.

Bei derartigen Stellantrieben hat es sich als problematisch herausgestellt, dass sich durch die Verwendung der Rückstellfeder eine vorgegebene Einbauposition bzw. -richtung für den Stellantrieb ergibt. Dies ist insbesondere darin begründet, dass durch die verwendete Rückstellfeder zumeist die Schließkraft bezüglich ihrer Schließrichtung von der zweiten Stellposition in die erste Stellposition vorgegeben ist. Durch eine von der vorgegebenen Einbauposition bzw. -richtung abweichende Verwendung des Stellantriebs würde sich somit automatisch eine Schließkraft der Rückstellfeder mit einer abweichenden Schließrichtung, beispielsweise von der ersten Stellposition in die zweite Stellposition, ergeben. Eine bestimmungsgemäße Funktionalität eines derartigen Stellantriebs kann in diesem Fall nicht mehr sichergestellt werden.

Gemäß dem Stand der Technik ist es bekannt, für verschiedene Einbaupositionen bzw. -richtungen entsprechend unterschiedliche Stellantriebe vorzusehen. Eine entsprechende Steigerung der Kosten sowohl bei der Herstellung als auch bei der Lagerhaltung derartiger Stellantriebe ist die Folge. Darüber hinaus ist es bekannt, an den Stellantrieben selbst aufwändige mechanische Umbauten vorzunehmen, um einen variablen Einbau in verschiedenen Einbaurichtungen bzw. -positionen zu ermöglichen, siehe beispielsweise die EP 0 697 546 A1. Hierbei ist jedoch ein zumindest teilweises Zerlegen und Umbauen des Stellantriebs nötig, wodurch auch diese Lösung gemäß dem Stand der Technik mit einem großen zeitlichen und technischen Aufwand verbunden ist.

Es ist daher Aufgabe der vorliegenden Erfindung, die voranstehend beschriebenen Nachteile bei Stellantrieben sowie bei Verfahren zum Einstellen von Stellantrieben zumindest teilweise zu beheben. Insbesondere ist es Aufgabe der vorliegenden Erfindung, einen Stellantrieb sowie ein Verfahren zum Einstellen eines Stellantriebs bereitzustellen, die auf einfache und kostengünstige Art und Weise eine Verwendung des Stellantriebs in verschiedenen Einbaupositionen bzw. -richtungen ermöglichen.

Voranstehende Aufgabe wird gelöst durch einen Stellantrieb mit den Merkmalen des unabhängigen Anspruchs 1. Ferner wird die Aufgabe gelöst durch ein Verfahren zum Einstellen eines Stellantriebs gemäß den Merkmalen des nebengeordneten Anspruchs 13. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Stellantrieb beschrieben sind, selbstverständlich auch im Zusammenhang mit dem erfindungsgemäßen Verfahren sowie jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch einen Stellantrieb, aufweisend ein Antriebselement, einen Übertragungsabschnitt und ein Stellelement, wobei das Antriebselement zum Antreiben des Stellelements mit dem Stellelement durch den Übertragungsabschnitt mechanisch wirkverbunden ist, der Stellantrieb ferner aufweisend eine Rückstellfeder zum Bereitstellen einer auf das Stellelement wirkenden Schließkraft. Ein erfindungsgemäßer Stellantrieb ist dadurch gekennzeichnet, dass der Stellantrieb eine Kopplungsvorrichtung zum Bereitstellen einer mechanischen Wirkverbindungen zwischen der Rückstellfeder und dem Übertragungsabschnitt aufweist, wobei die Kopplungsvorrichtung zumindest in einen ersten Kopplungszustand und in einen zweiten Kopplungszustand bringbar ist, wobei ferner bei der Kopplungsvorrichtung in ihrem ersten Kopplungszustand die Rückstellfeder die Schließkraft in einer ersten Schließrichtung und bei der Kopplungsvorrichtung in ihrem zweiten Kopplungszustand die Rückstellfeder die Schließkraft in einer zweiten Schließrichtung auf das Stellelement ausübt, und wobei die erste Schließrichtung und die zweite Schließrichtung unterschiedlich sind.

Ein erfindungsgemäßer Stellantrieb kann für sämtliche Einsatzgebiete verwendet werden, in denen Stellantriebe üblicherweise eingesetzt werden. Insbesondere kann ein erfindungsgemäßer Stellantrieb für ein Stellen von Klappen und/oder Ventilen in Anlagen für eine Heizung, Lüftung oder Kühlung in einem Gebäude eingesetzt werden. So weist ein erfindungsgemäßer Stellantrieb insbesondere ein Antriebselement, bevorzugt einen Elektromotor oder auch ein beispielsweise pneumatisches oder hydraulisches Kolbenelement auf, um die für das Stellen des Stellelements nötige mechanische Energie bereitstellen zu können. Das Stellelement kann wiederum zum Antreiben beispielsweise einer Klappe oder eines Ventils ausgebildet oder sogar als Teil einer derartigen Klappe bzw. Ventils selbst gebildet sein. Um die mechanische Energie beziehungsweise die Bewegung vom Antriebselement auf das Stellelement zu übertragen, weist ein erfindungsgemäßer Stellantrieb einen Übertragungsabschnitt auf, über den das Antriebselement und das Stellelement mechanisch wirkverbunden sind. Eine derartige mechanische Wirkverbindung kann beispielsweise über ein Hebelgestänge, bevorzugt über ein Zahnradgetriebe, als Teil des Übertragungsabschnitts bereitgestellt werden. Darüber hinaus weist ein erfindungsgemäßer Stellantrieb eine Rückstellfeder auf, durch die eine auf das Stellelement wirkende Schließkraft bereitgestellt werden kann.

Erfindungswesentlich bei einem Stellantrieb gemäß der Erfindung ist ferner, dass zusätzlich zu den oben genannten Bauelementen eine Kopplungsvorrichtung vorgesehen ist, die für ein Bereitstellen einer mechanischen Wirkverbindung zwischen der Rückstellfeder und dem Übertragungsabschnitt eingesetzt wird. Mit anderen Worten ist die Rückstellfeder nicht direkt mit dem Antriebselement, dem Übertragungsabschnitt oder dem Stellelement mechanisch wirkverbunden, sondern indirekt über die Kopplungsvorrichtung. Über diese Kopplungsvorrichtung kann, wie oben bereits beschrieben, eine mechanische Wirkverbindung zwischen der Rückstellfeder und dem Übertragungsabschnitt hergestellt werden, wodurch automatisch auch eine mechanische Wirkverbindung zwischen der Rückstellfeder über den Übertragungsabschnitt und dem Stellelement hergestellt werden kann. Erfindungsgemäß kann nun die Kopplungsvorrichtung zumindest in einen ersten Kopplungszustand und einen zweiten Kopplungszustand gebracht werden. Diese beiden Kopplungszustände sind insbesondere unterschiedlich und weisen hinsichtlich des gesamten Stellantriebs auch unterschiedliche Wirkungen und Folgen auf. Mit anderen Worten unterscheidet sich in den beiden Kopplungszuständen die mechanische Wirkverbindung, die zwischen der Rückstellfeder und dem Übertragungsabschnitt, und folglich auch zwischen der Rückstellfeder und dem Stellelement, hergestellt wird. Insbesondere wirkt die Schließkraft der Rückstellfeder bei einer Kopplungsvorrichtung in ihrem ersten Kopplungszustand in einer ersten Schließrichtung auf das Stellelement, bei einer Kopplungsvorrichtung in ihrem zweiten Zustand in einer zweiten Schließrichtung. Auch ist erfindungswesentlich vorgesehen, dass sich die erste Schließrichtung und die zweite Schließrichtung unterscheiden. Mit anderen Worten können über die Kopplungsvorrichtung und deren Kopplungszustände zumindest zwei unterschiedliche Schließrichtungen der Schließkraft der Rückstellfeder wirkend auf das Stellelement eingestellt werden. Besonders bevorzugt unterscheiden sich die beiden Schließrichtungen derart, dass dadurch ein unterschiedlicher Einbau des Stellantriebs hinsichtlich einer Einbauposition bzw. -richtung ermöglicht werden kann. Mit anderen Worten können bevorzugt die beiden Schließrichtungen derart ausgebildet sein, dass sich Bewegungen des Stellelements, die durch eine Schließkraft in der ersten Schließrichtung hervorgerufen werden, von Bewegungen des Stellelements, die durch eine Schließkraft in die zweite Schließrichtung hervorgerufen werden, derart unterscheiden, dass die entsprechenden Bewegungsrichtungen des Stellelements unterschiedlich sind.

Zusammenfassend kann somit bei einem erfindungsgemäßen Stellantrieb bereitgestellt werden, dass durch eine Wahl des Kopplungszustands der Kopplungsvorrichtung eine Schließrichtung einer Schließkraft der Rückstellfeder, die über den Übertragungsabschnitt auf das Stellelement wirkt, geändert und gezielt eingestellt werden kann. Ein Einsatz eines erfindungsgemäßen Stellantriebs in verschiedenen Einbaupositionen und/oder -richtungen kann auf diese Weise bereitgestellt werden, insbesondere ohne ein zumindest teilweises Zerlegen und Umbauen des Stellantriebs zu erfordern.

Besonders bevorzugt kann ferner bei einem erfindungsgemäßen Stellantrieb vorgesehen sein, dass die erste Schließrichtung und die zweite Schließrichtung entgegengesetzt oder zumindest im Wesentlichen entgegengesetzt sind. Auf diese Weise kann besonders einfach sichergestellt werden, dass sich auch die Bewegungen des Stellelements, die durch die Schließkräfte der Rückstellfeder in die erste Schließrichtung bzw. in die zweite Schließrichtung bewirkt werden, unterscheiden, insbesondere entgegengesetzt oder zumindest im Wesentlichen entgegengesetzt sind. Die Möglichkeit eines Einbaus des Stellantriebs in verschiedenen Einbaupositionen bzw. -richtungen kann auf diese Weise auf noch einfachere Art und Weise sichergestellt werden.

Gemäß einer besonders bevorzugten Ausgestaltungsform eines erfindungsgemäßen Stellantriebs kann ferner vorgesehen sein, dass die Kopplungsvorrichtung ein erstes Kopplungszahnrad, ein zweites Kopplungszahnrad sowie eine Kopplungshülse mit einer Innenverzahnung aufweist, wobei die Kopplungszahnräder derart mechanisch wirkverbunden sind, dass sie entgegengesetzte Drehrichtungen aufweisen, und wobei ferner das erste Kopplungszahnrad mit dem Übertragungsabschnitt mechanisch wirkverbunden ist, und wobei bei einer Kopplungsvorrichtung in ihrem ersten Kopplungszustand die Innenverzahnung der Kopplungshülse kämmend in das erste Kopplungszahnrad eingreift und bei einer Kopplungsvorrichtung in ihrem zweiten Kopplungszustand die Innenverzahnung der Kopplungshülse kämmend in das zweite Kopplungszahnrad eingreift. In dieser Ausgestaltungsform eines erfindungsgemäßen Stellantriebs weist die Kopplungsvorrichtung mechanisch besonders einfache Bauelemente auf, um die zumindest zwei Kopplungszustände für die unterschiedlichen Schließrichtungen bereitstellen zu können. Insbesondere weist die Kopplungsvorrichtung zwei Kopplungszahnräder auf, die mechanisch miteinander wirkverbunden sind.

Insbesondere ist diese mechanische Wirkverbindung der beiden Kopplungszahnräder derart ausgebildet, dass die beiden Kopplungszahnräder entgegengesetzte Drehrichtungen aufweisen. Dies kann beispielsweise besonders einfach dadurch bereitgestellt werden, dass die beiden Kopplungszahnräder direkt und unmittelbar kämmend ineinandergreifen. Als weiteres wesentliches Bauelement der Kopplungsvorrichtung ist erfindungsgemäß eine Kopplungshülse vorgesehen, die eine Innenverzahnung aufweist. Insbesondere die mechanische Wirkverbindung dieser Innenhülse mit jeweils einem der beiden Kopplungszahnräder ergibt nun die unterschiedlichen mechanischen Wirkverbindungen hinsichtlich der Kopplungszustände der Kopplungsvorrichtung. Bei einer Kopplungsvorrichtung in ihrem ersten Kopplungszustand greift die Innenverzahnung der Kopplungshülse kämmend in das erste Kopplungszahnrad ein, bei einer Kopplungsvorrichtung in ihrem zweiten Kopplungszustand kämmend in das zweite Kopplungszahnrad. Da bevorzugt die Kopplungshülse wiederum mit der Rückstellfeder mechanisch wirkverbunden ist, ergibt sich bei einer Ausübung der Schließkraft der Rückstellfeder eine vorgegebene Drehrichtung der Kopplungshülse. Je nachdem, welcher Kopplungszustand der Kopplungsvorrichtung eingestellt ist, und dadurch, in welches der beiden Kopplungszahnräder die Innenverzahnung der Kopplungshülse kämmend eingreift, ergibt sich eine Umkehrung der Drehrichtungen der Kopplungszahnräder. Über die mechanische Wirkverbindung des ersten Kopplungszahnrads mit dem Übertragungsabschnitt, und damit mit dem Stellelement, wird dadurch eine Bereitstellung der ersten bzw. zweiten Schließrichtung der Schließkraft ermöglicht. Dies kann zusammenfassend in der beschriebenen Ausgestaltungsform durch die mechanisch besonders einfach ausgestaltete Kopplungshülse und die Wahl des verwendeten Kopplungszahnrads zum kämmenden Eingriff der Kopplungshülse bereitgestellt werden.

Auch kann ein erfindungsgemäßer Stellantrieb dahin gehend weiterentwickelt sein, dass das erste Kopplungszahnrad und das zweite Kopplungszahnrad identisch ausgebildet sind. Identisch ausgebildete Kopplungszahnräder im Sinne der Erfindung weisen insbesondere dieselbe Anzahl von Zähnen und denselben Radius auf. Auf diese Weise kann insbesondere besonders einfach sichergestellt werden, dass sich die beiden Kopplungszahnräder, wenn auch mit unterschiedlichen Drehrichtungen, gleich schnell drehen. Ein Unterschied im Betrag der durch die Rückstellfeder hervorgehobenen Schließkraft kann auf diese Weise vermieden oder zumindest minimiert werden.

Darüber hinaus kann ein erfindungsgemäßer Stellantrieb dahin gehend weiterentwickelt sein, dass der Übertragungsabschnitt ein Übertragungsgetriebe, insbesondere ein Reduktionsgetriebe, mit zumindest einem Getriebezahnrad umfasst, wobei das erste Kopplungszahnrad koaxial und drehfest am zumindest einen Getriebezahnrad angeordnet ist. Durch ein derartiges Übertragungsgetriebe, insbesondere ein Reduktionsgetriebe, als Teil des Übertragungsabschnitts, kann besonders einfach und bevorzugt die mechanische Wirkverbindung zwischen dem Antriebselement und dem Stellelement des Stellantriebs bereitgestellt werden. Ein derartiges Übertragungsgetriebe weist mindestens ein Getriebezahnrad auf. Durch ein an diesem Getriebezahnrad koaxial und drehfest angeordneten ersten Kopplungszahnrad wiederum kann eine mechanische Wirkverbindung zwischen dem Übertragungsabschnitt und der Kopplungsvorrichtung besonders einfach vorbereitet beziehungsweise zumindest teilweise bereitgestellt werden. Auf diese Weise sind das erste Kopplungszahnrad und das zweite Kopplungszahnrad zu jederzeit mit dem Übertragungsabschnitt mechanisch wirkverbunden und drehen sich bei jeder Betätigung des Stellelements durch das Antriebselement mit. Über ein Einstellen der Kopplungshülse, das je nach Kopplungszustand der Kopplungsvorrichtung kämmend in das erste oder das zweite Kopplungszahnrad eingreift, kann wiederum die mechanische Wirkverbindung zwischen dem Übertragungsabschnitt der Kopplungsvorrichtung eingestellt bzw. hergestellt werden. Auf diese Weise kann beispielsweise ein Einbringen einer Vorspannung in die Rückstellfeder vorgenommen oder zumindest unterstützt werden.

Auch kann in einer Weiterentwicklung eines erfindungsgemäßen Stellantriebs ferner vorgesehen sein, dass die Rückstellfeder als eine Rollfeder ausgebildet ist, die an einer Außenseite der Kopplungshülse angeordnet ist. Eine derartige Rollfeder kann insbesondere eine besonders weiche Federhärte und eine flache Kennlinie aufweisen, wodurch der gesamte Stellantrieb, insbesondere das Antriebselement, ohne große Beeinflussung durch die Rückstellfeder betrieben werden kann. Ein Anordnen an einer Außenseite der Kopplungshülse, insbesondere ein Befestigen der Rückstellfeder an der Außenseite der Kopplungshülse, ermöglicht ein besonders platzsparendes Ausgestalten der Kopplungsvorrichtung und der Rückstellfeder als ein gemeinsamer Bauabschnitt und damit eine Reduktion eines Bauraumbedarfs des gesamten Stellantriebs.

Auch kann ein erfindungsgemäßer Stellantrieb dahin gehend ausgebildet sein, dass die Kopplungsvorrichtung ein zumindest in eine erste Schieberposition und eine zweite Schieberposition bringbares Schieberelement zur Einstellung des Kopplungszustands der Kopplungsvorrichtung aufweist, wobei die erste Schieberposition dem ersten Kopplungszustand und die zweite Schieberposition dem zweiten Kopplungszustand entspricht. Durch ein derartiges Schieberelement, das bevorzugt manuell und/oder angetrieben betätigbar ist, kann eine besonders einfache Art und Weise ermöglicht werden, die Kopplungsvorrichtung in ihre Kopplungszustände einzustellen. Dafür kann beispielsweise das Schieberelement zum Einstellen der Kopplungsvorrichtung in ihren ersten Kopplungszustand in die erste Schieberposition, für ein Einstellen der Kopplungsvorrichtung in ihren zweiten Kopplungszustand in die zweite Schieberposition gebracht werden. Dies kann, wie oben beschrieben, bevorzugt manuell geschehen, aber auch durch einen zusätzlichen Antrieb, beispielsweise einen Elektromotor oder auch einen pneumatisch oder hydraulisch betriebenen Hubkolben.

Gemäß einer besonders bevorzugten Weiterentwicklung eines erfindungsgemäßen Stellantriebs kann ferner vorgesehen sein, dass das Schieberelement und die Kopplungshülse ortsfest zueinander angeordnet sind, insbesondere aneinander befestigt sind. Wie oben beschrieben, wird über die Kopplungshülse, insbesondere die Wahl des Kopplungszahnrads, in die die Innenverzahnung der Kopplungshülse eingreift, der Kopplungszustand der Kopplungsvorrichtung bestimmt. Durch ein ortsfestes zueinander Anordnen, insbesondere ein aneinander Befestigen, des Schieberelements und der Kopplungshülse kann somit besonders einfach bereitgestellt werden, dass bei einer Bewegung des Schieberelements in seine erste bzw. zweite Schieberposition automatisch der erste bzw. zweite Kopplungszustand der Kopplungsvorrichtung eingestellt wird. Das Schieberelement und die Kopplungshülse können insbesondere direkt aneinander befestigt sein, alternativ auch indirekt unter Beteiligung weiterer Bauelemente, beispielsweise einer Montageplatte. Besonders viele und insbesondere an spezifische Anforderungen an den erfindungsgemäßen Stellantrieb anpassbare Möglichkeiten einer Realisierung des Stellantriebs können dadurch bereitgestellt werden.

Auch kann ein erfindungsgemäßer Stellantrieb dahin gehend ausgebildet sein, dass die Kopplungsvorrichtung ein Signalelement, insbesondere ein elektrisches Schaltelement, zum wenigstens teilweisen Erkennen des Kopplungszustands und/oder der Schieberposition aufweist. Auf diese Weise kann intern im erfindungsgemäßen Stellantrieb eine Information darüber bereitgestellt werden, welcher Kopplungszustand bzw. welche Schieberposition, die wiederum einem Kopplungszustand entspricht, momentan eingestellt ist. Dies lässt wiederum beispielsweise einen Schluss darüber zu, in welcher Einbauposition bzw. -richtung der Stellantrieb eingebaut ist bzw. eingebaut werden soll. Auf diese Weise kann beispielsweise bereits im Vorfeld eine entsprechend passende Ansteuerung des Antriebselements festgelegt werden.

Auch kann bei einem erfindungsgemäßen Stellantrieb ferner vorgesehen sein, dass die Kopplungsvorrichtung in einen Neutralzustand bringbar ist, in der die mechanische Wirkverbindung zwischen dem Übertragungsabschnitt und der Rückstellfeder getrennt ist. Ein derartiger Neutralzustand stellt mit anderen Worten somit einen Stellantrieb bereit, in dem durch die Rückstellfeder keinerlei Rückstellkraft bzw. Schließkraft auf das Stellelement ausgeübt wird bzw. werden kann. Dies ist beispielsweise vorteilhaft für Einsatzorte des Stellantriebs, in denen ein Verfahren des Stellelements in eine bestimmte Position bei einem Stromausfall nicht erforderlich oder zumindest nicht sicherheitsrelevant ist. Auch kann beispielsweise bei einer Montage des Stellantriebs vorgesehen sein, dass eben bei einer Kopplungsvorrichtung in ihrem Neutralzustand die Rückstellfeder mit einer Vorspannung versehen werden kann. Dies ist insbesondere dadurch erleichtert, dass in diesem Neutralzustand eben keine mechanische Wirkverbindung zwischen dem Übertragungsabschnitt und der Rückstellfeder vorherrscht, sodass die Rückstellfeder ohne weitere Wirkung auf den Übertragungsabschnitt und damit den restlichen Stellantrieb vorgespannt werden kann.

Bevorzugt kann ein erfindungsgemäßer Stellantrieb dahin gehend weiterentwickelt sein, dass der Stellantrieb eine Feststellvorrichtung zum Erhalten einer Vorspannung der Rückstellfeder bei einer Kopplungsvorrichtung in ihrem Neutralzustand aufweist. Durch eine derartige Feststellvorrichtung kann mit anderen Worten eine vorhandene Vorspannung der Rückstellfeder erhalten bleiben, auch wenn der Stellantrieb, insbesondere die Kopplungsvorrichtung, in ihrem Neutralzustand eingestellt ist. Ein Entspannen der Rückstellfeder durch ein Verbringen der Kopplungsvorrichtung in ihren Neutralzustand kann auf diese Weise vermieden werden. Bei einem späteren Einstellen des ersten Kopplungszustands bzw. des zweiten Kopplungszustands liegt somit die Rückstellfeder weiterhin mit einer Vorspannung vor und kann daher sofort verwendet werden, um eine Schließkraft auf das Stellelement des Stellantriebs auszuüben. Bevorzugt kann vorgesehen sein, dass bei einer Kopplungsvorrichtung in ihrem ersten oder ihrem zweiten Kopplungszustand die Feststellvorrichtung keinen oder zumindest keinen wesentlichen Einfluss auf die Rückstellfeder ausübt beziehungsweise ausüben kann.

Auch kann ein erfindungsgemäßer Stellantrieb derart ausgebildet sein, dass die Kopplungsvorrichtung eine Vorspannvorrichtung zum Einbringen einer Vorspannung in die Rückstellfeder aufweist. Dies ist oftmals von Vorteil, da auf diese Weise die Rückstellfeder besonders einfach mit einer Vorspannung versehen werden kann. Eine derartige Vorspannung ermöglicht somit bereits beim erstmaligen Einstellen der Kopplungsvorrichtung in ihren ersten Kopplungszustand bzw. ihren zweiten Kopplungszustand, eine Schließkraft auf das Stellelement, bereitgestellt über die mechanische Wirkverbindung über den Übertragungsabschnitt, ausüben zu können.

Gemäß einem zweiten Aspekt der Erfindung wird die Aufgabe gelöst durch ein Verfahren zum Einstellen eines Stellantriebs gemäß dem ersten Aspekt der Erfindung. Ein erfindungsgemäßes Verfahren ist durch folgende Schritte gekennzeichnet:
a) Verbringen des Stellelements in eine Stellposition, insbesondere in eine Stellposition mit maximaler Auslenkung,
b) Einbringen einer Vorspannung in die Rückstellfeder, und
c) Verbringen der Kopplungsvorrichtung entsprechend der Stellposition des Stellelements in ihren ersten Kopplungszustand oder in ihren zweiten Kopplungszustand.

Ein erfindungsgemäßes Verfahren ist zum Einstellen eines Stellantriebs gemäß dem ersten Aspekt der Erfindung vorgesehen. Sämtliche Vorteile, die ausführlich in Bezug auf einen erfindungsgemäßen Stellantrieb gemäß dem ersten Aspekt der Erfindung beschrieben worden sind, können somit auch durch ein erfindungsgemäßes Verfahren gemäß dem zweiten Aspekt der Erfindung bereitgestellt werden, das zum Einstellen eines derartigen Stellantriebs gemäß dem ersten Aspekt der Erfindung ausgebildet ist.

In einem ersten Schritt a) eines erfindungsgemäßen Verfahrens wird ein Stellantrieb, insbesondere das Stellelement des Stellantriebs, in eine Stellposition verbracht. Die Stellposition kann besonders bevorzugt derart gewählt sein, dass sie eine maximale Auslenkung darstellt. Bei einer als Klappe oder Ventil ausgebildeten bzw. eine Klappe oder Ventil ansteuerndes Stellelement kann insbesondere vorgesehen sein, dass diese Stellposition mit maximaler Auslenkung eine Endposition mit einem Endanschlag darstellt, beispielsweise eine maximale Öffnung beziehungsweise ein vollständiges Schließen der Klappe beziehungsweise des Ventils.

Im nächsten Schritt b) wird eine Vorspannung in die Rückstellfeder des erfindungsgemäßen Stellantriebs eingebracht. Mit anderen Worten wird die Rückstellfeder vorgespannt, beispielsweise bei Verwendung einer Rollfeder wird diese durch ein Verdrehen der Rollfeder entgegen ihrer Entspannungsdrehrichtung gespannt. Das Einbringen der Vorspannung kann besonders bevorzugt durch eine Vorspannvorrichtung vorgenommen werden. Ferner kann bevorzugt im Anschluss die Vorspannung der Rückstellfeder durch eine Feststellvorrichtung fixiert werden.

Im letzten Schritt c) eines erfindungsgemäßen Verfahrens wird die Kopplungsvorrichtung entsprechend der Stellposition des Stellelements in ihren ersten Kopplungszustand oder in ihren zweiten Kopplungszustand verbracht. Mit anderen Worten wird in diesem Schritt c) eine mechanische Wirkverbindung zwischen dem Übertragungsabschnitt des Stellantriebs und der Rückstellfeder des Stellantriebs durch ein entsprechendes Einstellen der Kopplungsvorrichtung des Stellantriebs hergestellt. Dieses Herstellen der Wirkverbindung wird insbesondere derart vorgenommen, dass der Kopplungszustand der Kopplungsvorrichtung der Stellposition des Stellelements, die in Schritt a) eines erfindungsgemäßen Verfahrens eingestellt wurde, entspricht. Mit anderen Worten kann bevorzugt der Kopplungszustand derart gewählt sein, dass die durch die Rückstellfeder über die mechanische Wirkverbindung auf das Stellelement wirkende Schließkraft eine Schließrichtung aufweist, die dahin gehend ausgebildet ist, das Stellelement aus seiner in Schritt a) eingestellten Stellposition wegzubewegen. Vorteilhaft ist dies insbesondere dann, wenn beispielsweise bei einem Stromausfall das Antriebselement des Stellantriebs ausfällt und dadurch das Stellelement, angetrieben durch die Rückstellfeder, wieder in eine Ausgangsposition zurückgestellt wird.

Bevorzugt kann ein erfindungsgemäßes Verfahren dahin gehend weiterentwickelt sein, dass für die Vornahme des Schritts b), bevorzugt für eine Vornahme der Schritte a) und b), die Kopplungsvorrichtung in einen Neutralzustand eingestellt wird. In einem derartigen Neutralzustand ist insbesondere die mechanische Wirkverbindung zwischen der Rückstellfeder und dem Übertragungsabschnitt durch ein entsprechendes Einstellen der Kopplungsvorrichtung aufgehoben. Sowohl das Einbringen der Vorspannung in die Rückstellfeder in Schritt b) als auch das Verbringen des Stellelements in eine Stellposition in Schritt a) kann somit vereinfacht werden, insbesondere dadurch, da sich bei einer Kopplungsvorrichtung in ihrem Neutralzustand die Rückstellfeder und der Übertragungsabschnitt nicht gegenseitig beeinflussen.

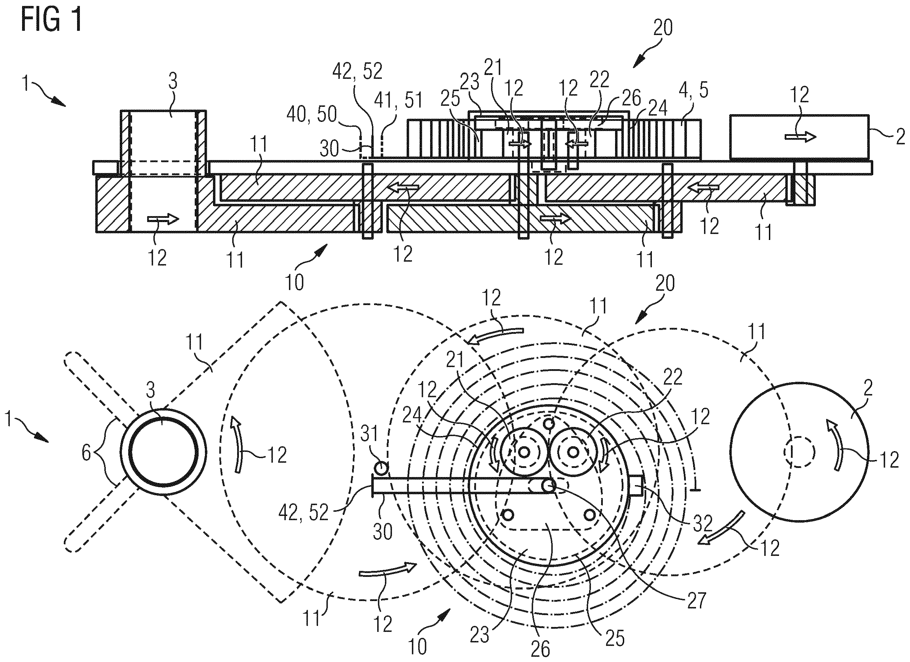

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 4 jeweils mit denselben Bezugszeichen versehen. Es zeigen schematisch:
- Fig. 1: ein erfindungsgemäßer Stellantrieb mit einer Kopplungsvorrichtung im Neutralzustand,
- Fig. 2: ein erfindungsgemäßer Stellantrieb mit einer Kopplungsvorrichtung in ihrem ersten Kopplungszustand,
- Fig. 3: ein erfindungsgemäßer Stellantrieb mit einer Kopplungsvorrichtung in ihrem zweiten Kopplungszustand, und
- Fig. 4: ein erfindungsgemäßes Verfahren.

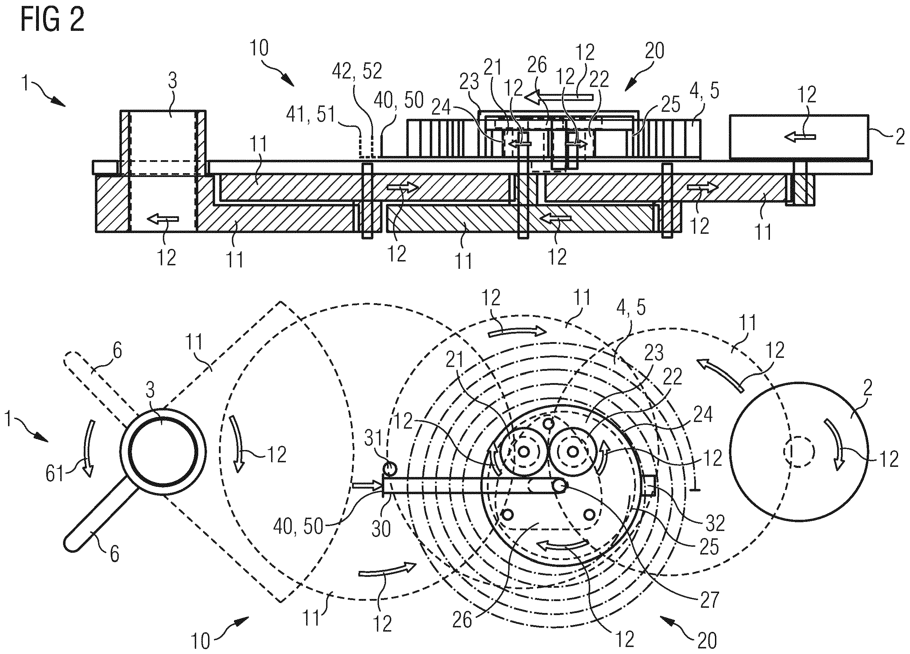

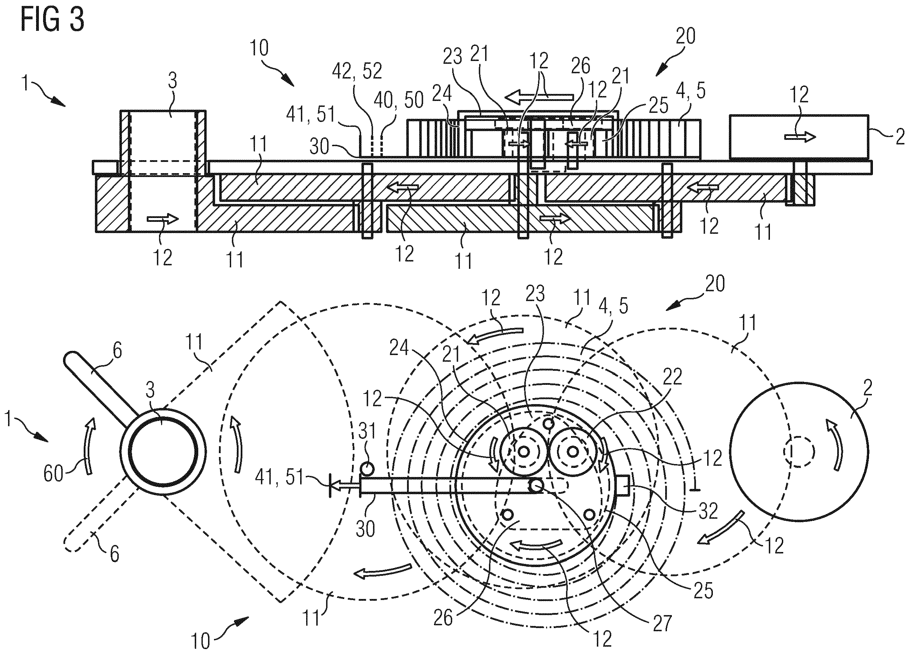

Die Fig. 1 bis 3 zeigen jeweils einen erfindungsgemäßen Stellantrieb 1, wobei die Kopplungsvorrichtung 20 des erfindungsgemäßen Stellantriebs 1 in Fig. 1 in ihrem Neutralzustand 42, in Fig. 2 in ihrem ersten Kopplungszustand 40 sowie in Fig. 3 in ihrem zweiten Kopplungszustand 41 vorliegt. Die Fig. 1 bis 3 werden daher im Folgenden gemeinsam beschrieben, wobei auf die einzelnen Figuren jeweils gesondert eingegangen wird. In den Fig. 1 bis 3 sind ferner in der oberen Abbildung jeweils eine seitliche Schnittansicht, in der unteren eine schematische Draufsicht auf den erfindungsgemäßen Stellantrieb 1 gezeigt.

Der in den Fig. 1 bis 3 dargestellte erfindungsgemäße Stellantrieb 1 weist insbesondere ein Antriebselement 2 auf, das über einen Übertragungsabschnitt 10 mit einem Stellelement 3 mechanisch wirkverbunden ist. Das Antriebselement 2 kann, wie dargestellt, ein elektrischer Antrieb sein, jedoch ohne die Erfindung zu verlassen auch beispielsweise als ein pneumatisches oder hydraulisches Kolbenelement ausgebildet sein. Das Stellelement 3 wiederum kann beispielsweise zum Antreiben einer Klappe 6 oder eines Ventils in Anlagen für eine Heizung, Lüftung oder Kühlung in einem Gebäude vorgesehen sein bzw. sogar einen Teil einer derartigen Klappe 6 oder eines Ventils bilden. Der Übertragungsabschnitt 10 ist in der dargestellten Ausgestaltungsform als ein Reduktionsgetriebe mit mehreren Getriebezahnrädern 11 ausgebildet. Neben den einzelnen Getriebezahnrädern 11 sind auch insbesondere deren Drehrichtungen 12 eingezeichnet. Neben dem bereits beschriebenen Antriebselement 2, dem Übertragungsabschnitt 10 sowie dem Stellelement 3 weist der erfindungsgemäße Stellantrieb 1 ferner eine Rückstellfeder 4 auf, die in der gezeigten Ausgestaltungsform als eine Rollfeder 5 ausgebildet ist.

Für ein Bereitstellen einer mechanischen Wirkverbindung zwischen eben dieser Rückstellfeder 4 und dem Übertragungsabschnitt 10 ist bei einem erfindungsgemäßen Stellantrieb 1 eine Kopplungsvorrichtung 20 vorgesehen. Diese Kopplungsvorrichtung 20 kann zumindest in einem ersten Kopplungszustand 40, gezeigt in Fig. 2, und einem zweiten Kopplungszustand 41, abgebildet in Fig. 3, vorliegen. Darüber hinaus kann gemäß der dargestellten bevorzugten Ausgestaltungsform eines erfindungsgemäßen Stellantriebs 1 die Kopplungsvorrichtung 20 auch in dem in Fig. 1 gezeigten Neutralzustand 42 vorliegen. In diesem Neutralzustand 42 ist insbesondere die mechanische Wirkverbindung zwischen der Rückstellfeder 4 und dem Übertragungsabschnitt 10 getrennt. Für ein Bereitstellen dieser mechanischen Wirkverbindung, wie sie in Fig. 2 und 3 gezeigt ist, weist die Kopplungsvorrichtung 20 insbesondere ein erstes Kopplungszahnrad 21 und ein zweites Kopplungszahnrad 22 auf. Die beiden Kopplungszahnräder 21, 22 können bevorzugt identisch ausgebildet sein und greifen kämmend ineinander, wodurch die Drehrichtungen 12 der beiden Kopplungszahnräder 21, 22 entgegengesetzt ausgebildet sind. Um die beiden Kopplungszahnräder 21, 22 herum ist eine Kopplungshülse 23 angeordnet, die insbesondere eine Innenverzahnung 25 aufweist. In Fig. 1, und damit im Neutralzustand 42 der Kopplungsvorrichtung 20, ist die Kopplungshülse 23 derart angeordnet, dass keine mechanische Wirkverbindung zwischen der Innenverzahnung 25 der Kopplungshülse 23 und den beiden Kopplungszahnrädern 21, 22 vorliegt. Mit anderen Worten drehen sich bei einer Betätigung des Antriebselements 2 zwar die beiden Kopplungszahnräder 21, 22 mit, da das erste Kopplungszahnrad 21 koaxial fest an einem der Getriebezahnräder 11 angeordnet ist, die Kopplungshülse 23 und die an der Außenseite 24 der Kopplungshülse 23 angeordnete Rückstellfeder 4 werden jedoch nicht mit angetrieben. Gleichzeitig kann jedoch, beispielsweise über eine Vorspannvorrichtung 27, die Kopplungshülse 23 und damit die Rückstellfeder 4 gedreht werden, um eine Vorspannung in die Rückstellfeder 4 einzubringen. Über eine Feststellvorrichtung 32 kann diese Vorspannung im vorliegenden Neutralzustand 42 bevorzugt auch erhalten bleiben.

In den Fig. 2 und 3 sind nun der erste Kopplungszustand 40 bzw. der zweite Kopplungszustand 41 der Kopplungsvorrichtung 20 gezeigt. Die beiden Kopplungszustände 40, 41 unterscheiden sich insbesondere darin, in welches der beiden Kopplungszahnräder 21, 22 die Innenverzahnung 25 der Kopplungshülse 23 eingreift. So greift in Fig. 2 die Innenverzahnung 25 der Kopplungshülse 23 in das erste Kopplungszahnrad 21 kämmend ein, in Fig. 3 in das zweite Kopplungszahnrad 22. Eingestellt werden kann dies insbesondere über ein Schieberelement 30, das bevorzugt über eine gemeinsame Montageplatte 26 fest mit der Kopplungshülse 23 verbunden bzw. an dieser befestigt sein kann und zwischen einer ersten Schieberposition 50, die dem ersten Kopplungszustand 40 entspricht, und einer zweiten Schieberposition 51, die dem zweiten Kopplungszustand 41 entspricht, bewegt werden kann. Zwischen der ersten Schieberposition 50 und der zweiten Schieberposition 51 liegt eine neutrale Schieberposition 52, die wiederum den in Fig. 1 gezeigten Neutralzustand 42 der Kopplungsvorrichtung 20 entspricht. Über ein Signalelement 31, das beispielsweise als elektrischer Schalter ausgebildet sein kann, kann insbesondere die Schieberposition 50, 51, 52 bzw. der jeweilige Kopplungszustand 40, 41 oder der Neutralzustand 42 der Kopplungsvorrichtung 20 ermittelt werden. Nachgeschaltet kann ein derartiges Ermitteln beispielsweise verwendet werden, einerseits um einen Zustand des Stellantriebs 1 festzustellen als auch beispielsweise um eine Antriebsrichtung des Antriebselements 2 automatisch festzulegen.

Bei einem Vergleich von Fig. 2 und Fig. 3 wird deutlich, dass sich beinahe sämtliche Drehrichtungen 12 umdrehen. Mit anderen Worten sind in Fig. 2 und Fig. 3 unterschiedliche Einbaupositionen bzw. -richtungen eines erfindungsgemäßen Stellantriebs 1 gezeigt. Die einzige Drehrichtung 12, die sich nicht umgekehrt, ist diejenige, die direkt in der Kopplungshülse 23 abgebildet ist und die auch entsprechend die Drehrichtung 12 der Kopplungshülse 23 darstellt. Dies ist insbesondere darin begründet, da die Rückstellfeder 4 an der Außenseite 24 der Kopplungshülse 23 angeordnet ist, und somit unabhängig von der Einbauposition bzw. -richtung des Stellantriebs 1 die Drehrichtung 12 der Kopplungshülse 23 bestimmt. Über ein Einstellen eines entsprechenden Kopplungszustands 40, 41 der Kopplungsvorrichtung 20 kann jedoch sichergestellt werden, dass in jeder der Einbaupositionen bzw. - richtungen des Stellantriebs 1 durch die Rückstellfeder 4 eine entsprechende Schließkraft mit einer passenden Schließrichtung 60, 61 auf das Stellelement 3 und beispielsweise eine an dem Stellelement 3 angeordnete Klappe 6 ausgeübt werden kann. Dies ist in Fig. 2 und Fig. 3 mit den Schließrichtungen 60, 61 gezeigt, wobei in Fig. 2 die erste Schließrichtung 60 entgegengesetzt zur in Fig. 3 dargestellten zweiten Schließrichtung 61 ist. Durchgezogen ist jeweils beispielhaft eine mögliche Anordnung der Klappe 6 dargestellt, die in diesem Fall jeweils einer geschlossenen Klappe 6 entspricht, gestrichelt ihre jeweils maximal ausgelenkte Stellung.

Zusammenfassend kann durch einen erfindungsgemäßen Stellantrieb 1 somit insbesondere ein Einbau in verschiedenen, insbesondere entgegengesetzten, Positionen bzw. Richtungen bereitgestellt werden, wobei durch ein entsprechendes Einstellen einer Kopplungsvorrichtung 20 eines erfindungsgemäßen Stellantriebs 1 eine Schließkraft einer Rückstellfeder 4 auf das Stellelement 3 des Stellantriebs 1 bereitgestellt werden kann, die der jeweiligen Einbauposition bzw. -richtung angepasst ist. Mit anderen Worten kann insbesondere durch die Kopplungsvorrichtung 20 ein erster Kopplungszustand 4 eingestellt werden, in der die Schließkraft in einer ersten Schließrichtung 60 wirkt und ein zweiter Kopplungszustand 41 eingestellt werden, in der die Schließkraft in eine zweite Schließrichtung 61 wirkt. Bevorzugt sind insbesondere die erste Schließrichtung 60 und die zweite Schließrichtung 61 entgegengesetzt.

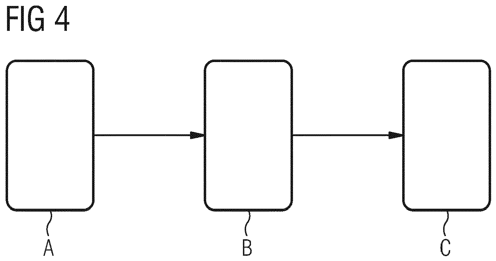

In Fig. 4 ist schematisch ein erfindungsgemäßes Verfahren dargestellt, wie es durch einen erfindungsgemäßen Stellantrieb 1 zum Einstellen desselben ausgeführt werden kann. Der für eine Durchführung des Verfahrens notwendige Stellantrieb 1 und dessen Bauelemente sind nicht mit abgebildet. Die einzelnen Schritte a), b) und c) sind in Fig. 4 jeweils mit Großbuchstaben A, B, C bezeichnet.

In einem ersten Schritt a) eines erfindungsgemäßen Verfahrens wird das Stellelement 3 des Stellantriebs 1 in eine Stellposition verbracht. Diese Stellposition kann insbesondere eine Stellposition mit maximaler Auslenkung darstellen. So kann beispielsweise eine am Stellelement 3 angeordnete Klappe 6 maximal geöffnet werden. Im nächsten Schritt b) wird eine Vorspannung in eine Rückstellfeder 4 des Stellantriebs 1 eingebracht. Dies kann besonders bevorzugt über eine Vorspannvorrichtung 27 erfolgen, wobei insbesondere nach Einbringen der Vorspannung diese Vorspannung in der Rückstellfeder 4 durch eine Feststellvorrichtung 32 festgestellt und aufrechterhalten werden kann. Besonders bevorzugt können die beiden Schritte a) und b) zu einem Zeitpunkt durchgeführt werden, wenn sich eine Kopplungsvorrichtung 20 eines erfindungsgemäßen Stellantriebs 1 in einem Neutralzustand 42 befindet. Dies ist insbesondere darin begründet, da sich bei einem derartigen Neutralzustand 42 über die Kopplungsvorrichtung 20 keine mechanische Wirkverbindung zwischen dem Übertragungsabschnitt 10 und der Rückstellfeder 4 einstellt, wodurch sowohl das Verbringen des Stellelements 3 in eine Stellposition als auch das Einbringen einer Vorspannung über die Rückstellfeder 4 ohne gegenseitige Beeinflussung durchgeführt werden kann. Im letzten Schritt c) eines erfindungsgemäßen Verfahrens wird nun eine Kopplungsvorrichtung 20 eines erfindungsgemäßen Stellantriebs 1 in eine ihrer Kopplungszustände 40, 41 verbracht, um die mechanische Wirkverbindung zwischen der Rückstellfeder 4 und dem Übertragungsabschnitt 10 und damit auch dem Stellelement 3 herzustellen. Die Wahl des verwendeten Kopplungszustands 40, 41 entspricht insbesondere der in Schritt a) eingenommenen Stellposition des Stellelements 3. Mit anderen Worten liegt nach dem Durchführen eines erfindungsgemäßen Verfahrens ein Stellantrieb 1 vor, der in einer beliebigen Einbauposition bzw. -richtung verbaut sein kann, wobei gleichzeitig besonders einfach eine vorgespannte Rückstellfeder 4 zur Bereitstellung einer Rückstellkraft mit einer entsprechenden Schließrichtung 60, 61 bereitgestellt werden kann.

### Bezugszeichenliste

- 1: Stellantrieb
- 2: Antriebselement
- 3: Stellelement
- 4: Rückstellfeder
- 5: Rollfeder
- 6: Klappe

- 10: Übertragungsabschnitt
- 11: Getriebezahnrad
- 12: Drehrichtung

- 20: Kopplungsvorrichtung
- 21: erstes Kopplungszahnrad
- 22: zweites Kopplungszahnrad
- 23: Kopplungshülse
- 24: Außenseite
- 25: Innenverzahnung
- 26: Montageplatte
- 27: Vorspannvorrichtung

- 30: Schieberelement
- 31: Signalelement
- 32: Feststellvorrichtung

- 40: erster Kopplungszustand
- 41: zweiter Kopplungszustand
- 42: Neutralzustand

- 50: erste Schieberposition
- 51: zweite Schieberposition
- 52: neutrale Schieberposition

- 60: erste Schließrichtung
- 61: zweite Schließrichtung

## Patentansprüche

1. Stellantrieb (1), aufweisend ein Antriebselement (2), einen Übertragungsabschnitt (10) und ein Stellelement (3), wobei das Antriebselement (2) zum Antreiben des Stellelements (3) mit dem Stellelement (3) durch den Übertragungsabschnitt (10) mechanisch wirkverbunden ist, der Stellantrieb (1) ferner aufweisend eine Rückstellfeder (4) zum Bereitstellen einer auf das Stellelement (3) wirkenden Schließkraft,
**dadurch gekennzeichnet,**
**dass** der Stellantrieb (1) eine Kopplungsvorrichtung (20) zum Bereitstellen einer mechanischen Wirkverbindung zwischen der Rückstellfeder (4) und dem Übertragungsabschnitt (10) aufweist, wobei die Kopplungsvorrichtung (20) zumindest in einen ersten Kopplungszustand (40) und in einen zweiten Kopplungszustand (41) bringbar ist, wobei ferner bei der Kopplungsvorrichtung (20) in ihrem ersten Kopplungszustand (40) die Rückstellfeder (4) die Schließkraft in einer ersten Schließrichtung (60) und bei der Kopplungsvorrichtung (20) in ihrem zweiten Kopplungszustand (41) die Rückstellfeder (4) die Schließkraft in einer zweiten Schließrichtung (61) auf das Stellelement (3) ausübt, und wobei die erste Schließrichtung (60) und die zweite Schließrichtung (61) unterschiedlich sind.

2. Stellantrieb (1) nach Anspruch 1,
**dadurch gekennzeichnet,**
**dass** die erste Schließrichtung (60) und die zweite Schließrichtung (61) entgegengesetzt oder zumindest im Wesentlichen entgegengesetzt sind.

3. Stellantrieb (1) nach Anspruch 1 oder 2,
**dadurch gekennzeichnet,**
**dass** die Kopplungsvorrichtung (20) ein erstes Kopplungszahnrad (21), ein zweites Kopplungszahnrad (22) sowie eine Kopplungshülse (23) mit einer Innenverzahnung (25) aufweist, wobei die Kopplungszahnräder derart mechanisch wirkverbunden sind, dass sie entgegengesetzte Drehrichtungen (12) aufweisen, und wobei ferner das erste Kopplungszahnrad (21) mit dem Übertragungsabschnitt (10) mechanisch wirkverbunden ist, und wobei bei einer Kopplungsvorrichtung (20) in ihrem ersten Kopplungszustand (40) die Innenverzahnung (25) der Kopplungshülse (23) kämmend in das erste Kopplungszahnrad (21) eingreift und bei einer Kopplungsvorrichtung (20) in ihrem zweiten Kopplungszustand (41) die Innenverzahnung (25) der Kopplungshülse (23) kämmend in das zweite Kopplungszahnrad (22) eingreift.

4. Stellantrieb (1) nach Anspruch 3,
**dadurch gekennzeichnet,**
**dass** das erste Kopplungszahnrad (21) und das zweite Kopplungszahnrad (22) identisch ausgebildet sind.

5. Stellantrieb (1) nach einem der Ansprüche 3 oder 4,
**dadurch gekennzeichnet,**
**dass** der Übertragungsabschnitt (10) ein Übertragungsgetriebe, insbesondere ein Reduktionsgetriebe, mit zumindest einem Getriebezahnrad (11) umfasst, wobei das erste Kopplungszahnrad (21) koaxial und drehfest am zumindest einen Getriebezahnrad (11) angeordnet ist.

6. Stellantrieb (1) nach einem der Ansprüche 3 bis 5,
**dadurch gekennzeichnet,**
**dass** die Rückstellfeder (4) als eine Rollfeder (5) ausgebildet ist, die an einer Außenseite (24) der Kopplungshülse (23) angeordnet ist.

7. Stellantrieb (1) nach einem der vorangegangenen Ansprüche,
**dadurch gekennzeichnet,**
**dass** die Kopplungsvorrichtung (20) ein zumindest in eine erste Schieberposition (50) und in eine zweite Schieberposition (51) bringbares Schieberelement (30) zur Einstellung des Kopplungszustands der Kopplungsvorrichtung (20) aufweist, wobei die erste Schieberposition (50) dem ersten Kopplungszustand (40) und die zweite Schieberposition (51) dem zweiten Kopplungszustand (41) entspricht.

8. Stellantrieb (1) nach Anspruch 7 und einem der Ansprüche 3 bis 6,
**dadurch gekennzeichnet,**
**dass** das Schieberelement (30) und die Kopplungshülse (23) ortsfest zueinander angeordnet sind, insbesondere aneinander befestigt sind.

9. Stellantrieb (1) nach einem der vorangegangenen Ansprüche,
**dadurch gekennzeichnet,**
**dass** die Kopplungsvorrichtung (20) ein Signalelement (31), insbesondere ein elektrisches Schaltelement, zum wenigstens teilweisen Erkennen des Kopplungszustands und/oder der Schieberposition aufweist.

10. Stellantrieb (1) nach einem der vorangegangenen Ansprüche,
**dadurch gekennzeichnet,**
**dass** die Kopplungsvorrichtung (20) in einen Neutralzustand (42) bringbar ist, in der die mechanische Wirkverbindung zwischen dem Übertragungsabschnitt (10) und der Rückstellfeder (4) getrennt ist.

11. Stellantrieb (1) nach Anspruch 10,
**dadurch gekennzeichnet,**
**dass** der Stellantrieb (1) eine Feststellvorrichtung (32) zum Erhalten einer Vorspannung der Rückstellfeder (4) bei einer Kopplungsvorrichtung (20) in ihrem Neutralzustand (42) aufweist.

12. Stellantrieb (1) nach einem der vorangegangenen Ansprüche,
**dadurch gekennzeichnet,**
**dass** die Kopplungsvorrichtung (20) eine Vorspannvorrichtung (27) zum Einbringen einer Vorspannung in die Rückstellfeder (4) aufweist.

13. Verfahren zum Einstellen eines Stellantriebs (1) nach einem der vorangegangenen Ansprüche,
**gekennzeichnet durchfolgende Schritte:**
a) Verbringen des Stellelements (3) in eine Stellposition, insbesondere in eine Stellposition mit maximaler Auslenkung,
b) Einbringen einer Vorspannung in die Rückstellfeder (4),
c) Verbringen der Kopplungsvorrichtung (20) entsprechend der Stellposition des Stellelements (3) in ihren ersten Kopplungszustand (40) oder in ihren zweiten Kopplungszustand (41).

14. Verfahren nach Anspruch 13,
**dadurch gekennzeichnet,**
**dass** für die Vornahme des Schritt b), bevorzugt für eine Vornahme der Schritte a) und b), die Kopplungsvorrichtung (20) in einen Neutralzustand (42) eingestellt wird.

## Claims

1. Actuator (1), having a drive element (2), a transmission section (10) and an actuating element (3), wherein the drive element (2), for driving the actuating element (3) with the actuating element (3), is mechanically actively connected through the transmission section (10), the actuator (1) further having a reset spring (4) for providing a closing force acting on the actuating element (3),
**characterised in that**
the actuator (1) has a coupling device (20) for providing a mechanically active connection between the reset spring (4) and the transmission section (10), wherein the coupling device (20) is at least able to be brought into a first coupling state (40) and into a second coupling state (41), wherein further, with the coupling device (20) in its first coupling state (40), the reset spring (4) exerts the closing force on the actuating element (3) in a first closing direction (60) and, with the coupling device (20) in its second coupling state (41), the reset spring (4) exerts the closing force on the actuating element (3) in a second closing direction (61), and wherein the first closing direction (60) and the second closing direction (61) are different.

2. Actuator (1) according to claim 1,
**characterised in that**
the first closing direction (60) and the second closing direction (61) are opposite directions or at least essentially opposite directions.

3. Actuator (1) according to claim 1 or 2,
**characterised in that**
the coupling device (20) has a first coupling gear wheel (21), a second coupling gear wheel (22) and also a coupling sleeve (23) with an inner toothing (25), wherein the coupling gear wheels are mechanically actively connected in such a way that they have opposite directions of rotation (12), and wherein further the first coupling gear wheel (21) is mechanically actively connected to the transmission section (10), and wherein, with a coupling device (20) in its first coupling state (40), the inner toothing (25) of the coupling sleeve (23) makes a meshing engagement into the first coupling gear wheel (21) and, with a coupling device (20) in its second coupling state (41), the inner toothing (25) of the coupling sleeve (23) makes a meshing engagement into the second coupling gear wheel (22).

4. Actuator (1) according to claim 3,
**characterised in that**
the first coupling gear wheel (21) and the second coupling gear wheel (22) are embodied identically.

5. Actuator (1) according to one of claims 3 or 4,
**characterised in that**
the transmission section (10) comprises a transmission gear, in particular a reduction transmission, with at least one transmission gear wheel (11), wherein the first coupling gear wheel (21) is arranged coaxially and in a torsion-proof manner on the at least one transmission gear wheel (11).

6. Actuator (1) according to one of claims 3 to 5,
**characterised in that**
the reset spring (4) is embodied as a scroll spring (5), which is arranged on an outer side (24) of the coupling sleeve (23).

7. Actuator (1) according to one of the preceding claims,
**characterised in that**
the coupling device (20) has a pusher element (30) able to be brought into at least a first pusher position (50) and into a second pusher position (51) for setting the coupling states of the coupling device (20), wherein the first pusher position (50) corresponds to the first coupling state (40) and the second pusher position (51) to the second coupling state (41).

8. Actuator (1) according to claim 7 and one of claims 3 to 6,
**characterised in that**
the pusher element (30) and the coupling sleeve (23) are arranged in a fixed location in relation to one another, in particular are fastened to one another.

9. Actuator (1) according to one of the preceding claims,
**characterised in that**
the coupling device (20) has a signal element (31), in particular an electric switching element, for at least partly detecting the coupling state and/or the pusher position.

10. Actuator (1) according to one of the preceding claims,
**characterised in that**
the coupling device (20) is able to be brought into a neutral state (42), in which the mechanically active connection between the transmission section (10) and the reset spring (4) is separated.

11. Actuator (1) according to claim 10,
**characterised in that**
the actuator (1) has a retaining device (32) for maintaining a pre-tensioning of the reset spring (4) for a coupling device (20) in its neutral state (42).

12. Actuator (1) according to one of the preceding claims,
**characterised in that**
the coupling device (20) has a pre-tensioning device (27) for introducing a pre-tensioning into the reset spring (4).

13. Method for setting an actuator (1) according to one of the preceding claims,
**characterised by** the following steps:
a) Bringing the actuating element (3) into an actuating position, in particular into an actuating position with maximum deflection,
b) Introducing a pre-tensioning into the reset spring (4),
c) Bringing the coupling device (20) according to the actuating position of the actuating element (3) into its first coupling state (40) or into its second coupling state (41).

14. Method according to claim 13,
**characterised in that**,
for undertaking step b), preferably for undertaking steps a) and b), the coupling device (20) is set to a neutral state (42).

## Revendications

1. Actionneur (1), comprenant un élément d'actionnement (2), une section de transmission (10) et un élément de réglage (3), dans lequel l'élément d'actionnement (2) est couplé en liaison mécaniquement active à l'élément de réglage (3) par la section de transmission (10) pour actionner l'élément de réglage (3), l'actionneur (1) comprenant en outre un ressort de rappel (4) destiné à fournir une force de blocage agissant sur l'élément de réglage (3),
**caractérisé en ce que** l'actionneur (1) comprend un dispositif de couplage (20) destiné à fournir une liaison mécanique active entre le ressort de rappel (4) et la section de transmission (10), dans lequel le dispositif de couplage (20) peut être placé au moins dans un premier état de couplage (40) et un second état de couplage (41), dans lequel en outre, lorsque le dispositif de couplage (20) est dans son premier état de couplage (40), le ressort de rappel (4) exerce la force de blocage dans une première direction de blocage (60), et lorsque le dispositif de couplage (20) est dans son second état de couplage (41), le ressort de rappel (4) exerce la force de blocage dans une seconde direction de blocage (61) sur l'élément de réglage (3), et dans lequel la première direction de blocage (60) et la seconde direction de blocage (61) sont différentes.

2. Actionneur (1) selon la revendication 1,
**caractérisé en ce que** la première direction de blocage (60) et la seconde direction de blocage (61) sont opposées ou au moins essentiellement opposées.

3. Actionneur (1) selon l'une des revendications 1 ou 2,
**caractérisé en ce que** le dispositif de couplage (20) comprend une première roue dentée d'accouplement (21), une seconde roue dentée d'accouplement (22) et un manchon d'accouplement (23) comprenant une denture intérieure (25), dans lequel les roues dentées d'accouplement sont en liaison mécaniquement active de manière à avoir des sens de rotation (12) opposés, et dans lequel en outre la première roue dentée d'accouplement (21) est en liaison mécaniquement active avec la section de transmission (10), et dans lequel lorsqu'un dispositif de couplage (20) est dans son premier état de couplage (40), la denture intérieure (25) du manchon d'accouplement (23) s'engrène dans la première roue dentée d'accouplement (21) et lorsqu'un dispositif de couplage (20) est dans son second état de couplage (41), la denture intérieure (25) du manchon d'accouplement (23) s'engrène dans la seconde roue dentée d'accouplement (22).

4. Actionneur (1) selon la revendication 3,
**caractérisé en ce que** la première roue dentée d'accouplement (21) et la seconde roue dentée d'accouplement (22) sont configurées de façon identique.

5. Actionneur (1) selon l'une des revendications 3 ou 4,
**caractérisé en ce que** la section de transmission (10) comprend un engrenage de transmission, notamment un mécanisme réducteur, comprenant au moins une roue dentée d'engrenage (11), dans lequel la première roue dentée d'accouplement (21) est disposée de façon coaxiale et solidaire en rotation sur au moins une roue dentée d'engrenage (11).

6. Actionneur (1) selon l'une des revendications 3 à 5,
**caractérisé en ce que** le ressort de rappel (4) est agencé sous forme d'un ressort enroulé (5) qui est agencé sur un côté extérieur (24) du manchon d'accouplement (23).

7. Actionneur (1) selon l'une des revendications précédentes,
**caractérisé en ce que** le dispositif de couplage (20) comprend un élément de coulisseau (30) pouvant être placé au moins dans une première position de coulisseau (50) et dans une seconde position de coulisseau (51) pour régler l'état de couplage du dispositif de couplage (20), dans lequel la première position de coulisseau (50) correspond au premier état de couplage (40) et la seconde position de coulisseau (51) correspond au second état de couplage (41).

8. Actionneur (1) selon la revendication 7 et l'une des revendications 3 à 6,
**caractérisé en ce que** l'élément de coulisseau (30) et le manchon d'accouplement (23) sont agencés fixement l'un par rapport à l'autre, notamment fixés l'un à l'autre.

9. Actionneur (1) selon l'une des revendications précédentes,
**caractérisé en ce que** le dispositif de couplage (20) comprend un élément de signalisation (31), notamment un élément de commutation électrique, destiné à détecter au moins en partie l'état de couplage et/ou la position du coulisseau.

10. Actionneur (1) selon l'une des revendications précédentes,
**caractérisé en ce que** le dispositif de couplage (20) peut être placé dans un état neutre (42) dans lequel la liaison mécanique active entre la section de transmission (10) et le ressort de rappel (4) est séparée.

11. Actionneur (1) selon la revendication 10,
**caractérisé en ce que** l'actionneur (1) comprend un dispositif de blocage (32) destiné à maintenir une tension initiale du ressort de rappel (4) lorsque qu'un dispositif de couplage (20) est dans son état neutre (42).

12. Actionneur (1) selon l'une des revendications précédentes,
**caractérisé en ce que** le dispositif de couplage (20) comprend un dispositif de tension initiale (27) destiné à appliquer une tension initiale dans le ressort de rappel (4) .

13. Procédé pour régler un actionneur (1) selon l'une des revendications précédentes,
**caractérisé par** les étapes suivantes consistant à :
a) placer l'élément de réglage (3) dans une position de réglage, notamment dans une position de réglage ayant une élongation maximale,
b) appliquer une tension initiale dans le ressort de rappel (4),
c) placer le dispositif de couplage (20), en fonction de la position de réglage de l'élément de réglage (3), dans son premier état de couplage (40) ou dans son second état de couplage (41).

14. Procédé selon la revendication 13,
**caractérisé en ce que**, pour exécuter l'étape b), de préférence pour exécuter les étapes a) et b), le dispositif de couplage (20) est positionné dans un état neutre (42).
